# EUROPEAN PATENT APPLICATION

(11) **EP 4 600 069 A1**
(43) Date of publication of application: **13.08.2025**
(21) Application number: 24156065.5
(22) Date of filing: 06.02.2024
(51) Int. Cl.: B60L 3/00, B60L 53/14, B60L 53/16, H01R 13/66

(54) **CHARGING COUPLER FOR COUPLING AN ELECTRIC VEHICLE, EV, TO AN ELECTRIC VEHICLE SUPPLY EQUIPMENT, AND METHOD OF OPERATING SAME**

(71) Applicant: ABB E-mobility B.V., 2629 JG Delft (NL)
(72) Inventor: Al Sawair, Amir, 2611 KN Delft (NL); Raaijmakers, Stefan, 2613 WN Delft (NL)
(74) Representative: Zimmermann & Partner Patentanwälte mbB

(57) **Abstract**

A charging connector (10) for an electric vehicle supply equipment, EVSE, the charging connector (10) comprises: a primary contact element (12) and a secondary contact element (14) for electrical connection to a counter-coupler contact element (24) of an electric vehicle, EV, counter-coupler (11) when the charging connector (10) and the counter-coupler (11) are connected to each other; an insulating element (16) electrically separating the primary and secondary contact elements (12, 14) from each other; and a measurement circuit (18) configured to measure an electrical parameter of an electrical path (20) formed by the primary contact element (12), the counter-coupler contact element (24) and the secondary contact element (14) when the charging connector (10) and the counter-coupler (11) are connected to each other.

## Description

### TECHNICAL FIELD

Embodiments of the present disclosure relate to a charging coupler for coupling an electric vehicle, EV, to an electric vehicle supply equipment, EVSE. The charging coupler may be an EVSE connector or an EV inlet. Embodiments of the present disclosure also relate to a method of charging an electric vehicle using the charging coupler.

### BACKGROUND

For adoption of electric vehicle technology such as electric buses or cars, the evolution of charging systems represents a critical element. When entering the complexity of DC fast charging, there is an increased focus on improving both efficiency and safety. Central to this objective is the task of timely detecting and eliminating issues associated with poor contact in connectors. Such issues may arise due to contaminated or soiled electrical contacts which results in a bad or unreliable electrical connection. This problem might result in electrical contacts being overheated due to increased electrical resistance or more generally increased electrical impedance. If not addressed, such a condition can lead to excessive heat generation and may cause a significant risk of overheating and damage to vehicle components. Another problem might be that the electrical connection might not be established due a too high electrical impedance, which might be the case with contacts used for communication and the like. Analogously for contacts used for safety, for instance Protective Earth, it is of high importance to ensure that the contact is reliably established.

The demand for advanced solutions in this area is indicative of the ongoing development of the electric vehicle infrastructure and underlines the need for advanced techniques to ensure a safe and efficient charging experience.

### TERMS AND DEFINITIONS

This application uses terms that are briefly explained below.

Electric Vehicle Supply Equipment (EVSE) is a hardware and software system that provides electrical energy for charging electric vehicles (EVs). It includes in particular the charging station. The EVSE has a charging connector that can be connected to a corresponding inlet of the EV for establishing an electric connection for charging the EV. Besides the electric connection, also a communications link and other functions such as protective earth contact may be provided. The term "charging coupler" may refer to either one of the EVSE charging connector and the EV inlet, and the term "counter-coupler" may refer to the other one of these.

In this document, "or" is understood as a non-exclusive disjunction. Thus, the expression "A or B" means that at least one of the statements A, B involved is true. Alternatively, the expression "A or B" is understood as an explanation of feature A by feature B.

The terms "substantially", "basically" or "about" as used herein typically imply that there may be a certain deviation, e.g. up to 1%, up to 3% or up to 10%, from the characteristic denoted with "substantially", "basically" or "about".

### SUMMARY

In view of the above, a charging coupler for coupling an electric vehicle, EV, to an electric vehicle supply equipment, EVSE, according to claim 1, and a method according to claim 12 are provided.

According to an aspect of the present disclosure, a charging coupler for coupling an electric vehicle, EV, to an electric vehicle supply equipment, EVSE, by connecting the charging coupler to a counter coupler is provided. The charging coupler may be an EVSE connector, which is a component of an EVSE, in particular of a charging station, by which the EVSE is electrically connected to an electric vehicle, in particular to the EV's inlet (counter-coupler). Alternatively, the charging coupler may be an EV inlet, by which the EV is electrically connected to an EVSE, in in particular to the EVSE's connector (counter-coupler). In both cases, the primary function of the charging coupler (and of the counter-coupler) is to safely transfer electrical power from the charging station to the EV and ultimately to the EV battery.

The charging coupler comprises a primary contact element and a secondary contact element for electrical connection to a (single) counter-coupler contact element of a counter-coupler when the charging coupler and the counter-coupler are connected to each other. In particular, the primary contact element and a secondary contact element may belong to a charging coupler contact of the connector, and/or may be of the same phase or polarity. For other phases or polarities, as well as for other functions such as earthing or communications, the charging coupler may comprise yet further charging coupler contacts. At least some of these further charging coupler contacts may also have primary and secondary contact element(s) as described herein.

The charging coupler (more specifically a charging coupler contact thereof) further comprises an insulating element that electrically separates the primary and secondary contact elements. This has the effect of preventing direct electrical contact between the primary and secondary contact elements, which beneficially facilitates electrical measurements as described herein. The insulating element does not imply complete galvanic insulation between the primary and secondary contact elements. For example, the primary and secondary contact elements may be electrically connected to each other via the measurement circuit described further below. In particular embodiments, the primary and secondary contact elements may be not directly electrically connected to each other, and/or they may be electrically connected to each other only via the measurement circuit.

The charging coupler further comprises a measurement circuit configured to measure an electrical parameter of an electrical path formed by the primary contact element, the counter-coupler contact element and the secondary contact element when the charging coupler and the counter-coupler are connected to each other (when the primary and secondary contact elements are connected to the counter-coupler contact element). The measurement circuit is a circuit within the charging coupler configured to measure an electrical parameter, in particular an electrical parameter such as voltage, current and impedance (in particular resistance). The electrical path is a closed loop through which electrical current can flow. The measurement circuit and the electrical path may include components and paths also used for other purposes such as for charging the EV.

According to further aspect of the present disclosure, an EVSE comprising the charging coupler described herein is provided.

According to further aspect of the present disclosure, a method of charging an electric vehicle using the charging coupler or EVSE described herein are provided. The method comprises connecting the charging coupler and the counter-coupler to each other, thereby electrically connecting the primary contact element and the secondary contact element to the counter-coupler contact element of the counter-coupler; and measuring, by the measurement circuit, an electrical parameter of an electrical path formed by the primary contact element, the counter-coupler contact element and the secondary contact element.

Embodiments described herein allow the quality and integrity of the electrical connection to be monitored and assessed. By measuring an electrical parameter along the electrical path, information regarding the quality of the electric connection (e.g., an electrical impedance, in particular contact resistance) between the primary contact element and the counter-coupler contact element and/or between the secondary contact element and the counter-coupler contact element may be obtained. Thereby, problems such as poor contact or potential faults in the charging process may be detected, increasing the safety and efficiency of EV charging.

Embodiments described herein introduce a safe and efficient mechanism to detect and/or prevent operation using poor electrical contacts by providing appropriate measurement conditions of electrical parameters along an electrical charging path. It thus contributes to improving the safety and efficiency of electric vehicle (EV) charging systems, thereby reducing risks and improving the reliability as well as efficiency of the EV charging process.

Further aspects, advantages and features of the present disclosure are apparent from the dependent claims, the description and the accompanying drawings.

### BRIEF DESCRIPTION OF THE DRAWINGS

So that the manner in which the above recited features of the present disclosure can be understood in detail, a more particular description of the present disclosure, briefly summarized above, may be had by reference to typical embodiments. The accompanying drawings relate to embodiments of the present disclosure and are described in the following:
Fig. 1 shows a schematic representation of an outlet connector arrangement in accordance with the requirements of the MCS (Megawatt Charging System) in a top view;
Fig. 2 shows a schematic representation of a charging connector arranged for interaction with an inlet, according to embodiments described herein;
Fig. 3 shows a flow chart of a method charging an electric vehicle according to embodiments described herein; and
Figs. 4-5 show, respectively, embodiments of charging connectors arranged for interaction with inlets according to further embodiments described herein.

### DETAILED DESCRIPTION OF EMBODIMENTS

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations. In particular, details explained with illustrative reference to any Figure shall not be understood as limited to the elements of this Figure. Rather, those details may also be combined with further embodiments explained with illustrative reference to the other figures.

Within the following description of the drawings, the same reference numbers refer to the same or to similar components. Generally, only the differences with respect to the individual embodiments are described.

The reference numbers of the figures are used merely for illustration. The aspects of the invention are not limited to any particular embodiment. Instead, any aspect or embodiment described herein can be combined with any other aspect or embodiment described herein unless specified otherwise.

In the following description, the charging coupler 10 is shown as an EVSE connector of (for) an EVSE. Correspondingly, the counter coupler 11 is shown as an EV inlet of (for) an EV. This specific example has been chosen for the sake of simplicity and definiteness, but without intending any loss of generality. It is understood that the same description also applies for the inverse situation, in which the charging coupler is an EV inlet and the counter coupler is an EVSE connector.

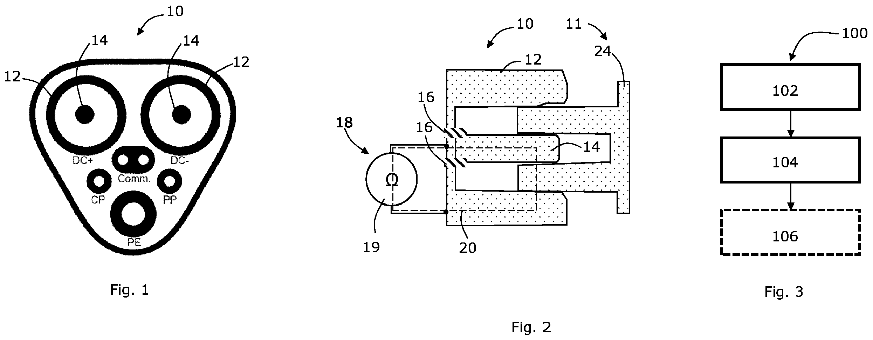

Fig. 1 shows a schematic representation of the geometry of an EVSE connector 10 in accordance with MCS (Megawatt Charging System) requirements. The connector 10 has two direct current charging contacts (DC+, DC-), a protective earth (PE), two communication lines (Comm.) and two CCS compatible pilot pins (CP, PP). The connector 10 is part of a power supply equipment, specifically of an EVSE, more specifically of a vehicle charging station, and is adapted for being connected to a corresponding inlet of an electric vehicle.

The DC+ and DC- connector contacts of the connector 10 are respectively designed to be connected, via corresponding contacts of the EV inlet, to the positive and negative terminals of a vehicle battery, providing the positive and negative voltages of the DC power supply to the battery.

Fig. 2 shows an embodiment of a charging connector 10 arranged for interaction with an inlet 11 on the vehicle side. Specifically, a single connector contact (DC+ or DC-) of the connector 10 is shown, and correspondingly a single inlet contact (inlet contact element) 24 of an EV inlet 11 is shown. Thus, a charging connector 10 may have a pair of connector contacts as shown in Fig. 2 and/or as described herein, for contacting a corresponding pair of EV inlet contacts of the EV inlet 11.

Fig. 2 shows the configuration when the charging connector 10 and the EV inlet 11 are connected to each other, and thus when the connector contact and the inlet contact (inlet contact element) 24 mate with each other.

The charging connector 10 shown in Fig. 2 (and in particular its connector contact) has a primary contact element 12 and a secondary contact element 14 for electrical connection to different surface portions of the inlet contact element 24 of the inlet 11. Further, an insulating element 16 electrically separates the primary and secondary contact elements 12, 14 from each other. Providing such an insulating element 16 is not incompatible with the MCS standard.

The insulating element 16 allows establishing a measurement circuit 18 as shown in Fig. 2. The measurement circuit 18 measures a resistance of an electrical path 20 formed by the primary contact element 12, the inlet contact element 24 and the secondary contact element 14 (and closed into a closed loop by the measurement circuit 18). The measurement circuit 18 has two terminals respectively connected to the primary and secondary contact elements 12, 14, and an impedance measurement device 19 connecting the two terminals to each other.

The impedance measurement device 19 can be realized in a variety of known ways, for example by a voltage source connected in parallel to a current measurement device. The impedance measurement device 19 typically includes an electrical power source. Instead of the impedance measurement device 19, also a device for measuring another electrical parameter of the electrical path 20 may be used. The impedance may be a DC impedance or an impedance at a predetermined frequency, or a response function including a plurality of frequencies or pulse shapes.

In one example, a current provided by the measurement device 19, preferably by its power source, flows along the electrical path 20 through regions of the primary and secondary contact elements 12, 14 and the inlet contact element 24, and back to the measurement circuit 18, which is thereby adapted to measure parameters of the electrical path 20, such as an electrical impedance (resistance).

The electrical parameter contains information regarding the quality of the electrical interface between the connector contact, in particular its primary and secondary contact elements 12 and 14, and the inlet contact element 24, and in particular regarding the contact impedance (contact resistance).

Fig. 3 shows a flow chart of the method 100 of charging an electric vehicle using the charging connector 10 as described herein and as shown, for example, in Figs. 1 and 2. The method 100 comprises connecting 102 the charging connector 10 and the EV inlet 11 to each other, thereby electrically connecting the primary contact element 12 and the secondary contact element 14 to the inlet contact element 24 of the EV inlet 11; and measuring 104, by the measurement circuit 18, an electrical parameter of an electrical path 20 formed by the primary contact element 12, the inlet contact element 24 and the secondary contact element 14. The method may optionally further comprise adaptively controlling 106 an operating condition of the EVSE based on the measured electrical parameter.

The measurement of electrical resistance/conductivity refers to the efficiency of the material in allowing current to flow, thereby allowing the efficiency and power dissipation in electrical circuits to be determined. The measurement of electrical current can be used to determine the operating capacity of electrical power equipment and to ensure adequate power delivery. Voltage measurement can be used to ensure that electrical equipment is receiving the required amount of power to operate. The impulse response describes how an electrical system responds over time to an external stimulus such as a short electrical pulse, and its measurement can provide insight into the stability and dynamic behaviour of the electrical system under transient conditions, particularly in response to fault sources that generate electrical currents at different frequencies. The transfer function describes how an electrical system processes input signals to produce outputs and reflects the system behaviour in the frequency domain, allowing the system to be analysed to achieve desired output characteristics, particularly in response to fault sources that produce electrical currents of different frequencies. The frequency characteristic provides details of how the system response varies with different signal frequencies, allowing the system performance to be improved in response to fault sources causing electrical currents of different frequencies.

By providing the insulating element 16 between the primary and secondary contact elements, various implementations for a measurement circuit become available, the one shown in Fig, 2 being only one example thereof. In particular, although the hardware implementation is very different, the principles for measuring the impedance as described in EP 3471991 A1 (EP'991) become available, whose content is incorporated herein in its entirety by reference. Therein, the primary and secondary contact elements 12 and 14 of the present disclosure correspond to the primary and secondary contacts 22, 23, 24 and 28, 128, 228 of EP'991; and the inlet contact element 24 of the present disclosure corresponds to the contact 32, 33, 34 of EP'991.

For example, the measurement illustrated in Fig. 2 described above corresponds to that of Fig. 3 of EP'991, the content and description of which is referred to and herewith incorporated by reference.

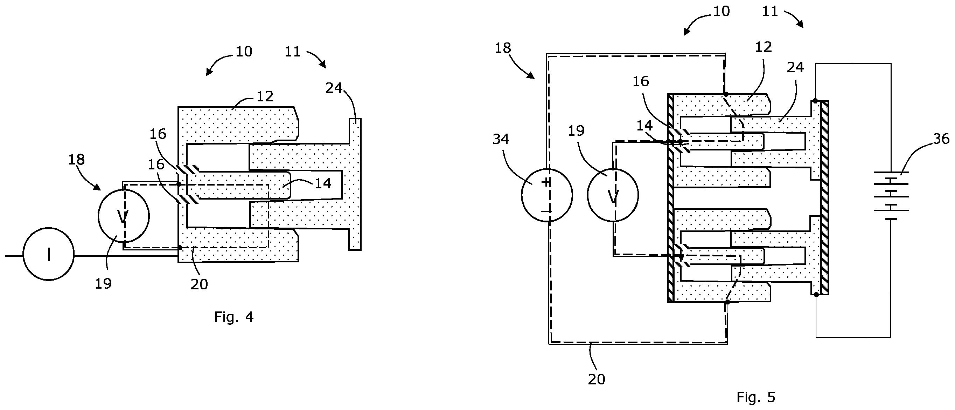

Further, the measurement illustrated in Fig. 4 corresponds to that of Fig. 5 of EP'991, the content and description of which is referred to and herewith incorporated by reference.

Further, the measurement illustrated in Fig. 5 corresponds to that of Fig. 6 of EP'991, the content and description of which is referred to and herewith incorporated by reference.

According to the embodiment shown in Fig. 4, during charging, a current I is flowing from the EVSE via the primary contact 12 and the inlet contact (inlet contact element) 24. Further, the inlet contact element 24 is also contacted by the secondary contact element 14. Thereby, a (first) current path goes from the primary contact element 12 directly to the inlet contact element 24. In addition, an electrical path 18 goes from the primary contact element 12 via the inlet contact element 24 to the secondary contact element 14, the loop being closed through the voltage measurement device 19. In order to determine the impedance, the voltage between the primary and secondary contact elements 12 and 14 is measured by the voltage measurement device 19.

Fig. 5 shows another embodiment. Therein, two (upper and lower, i.e., positive and negative) connector contacts of the connector 10 are electrically separated from each other and preferably physically separated from each other by a distance. The connector contacts may be arranged on a mounting base 30 which physically supports the charging connectors 10 and provides electrical insulation.

The inlet contacts 24 have a complementary design to the connector contacts and are arranged for mating with these. The inlet contacts 24 may be disposed on a mounting base 32 which physically supports them and provides electrical insulation between them.

A power supply 34 of the EVSE having a plus and a minus pole and adapted to provide electrical power to an EV battery 36 is shown in the left part of Fig 5. The plus pole is connected to the upper connector contact and the minus pole is connected to the lower connector contact of the charging connector 10. The upper connector contact (specifically, its primary contact element 12) is adapted to provide DC+ voltage and the lower one (specifically, its primary contact element) is adapted to provide DC- voltage to the vehicle battery 36 via the respective inlet contacts 24 of the inlet 11.

A further part of measurement circuit 18 is connected between the secondary contact elements of the two connector contacts, and contains a voltmeter 19.

In the embodiment of Fig. 5, the first (upper) connector contact and the second (lower) connector contact are used to measure the contact impedance of the electrical contacts. In the example shown in Fig. 5, the first connector contact arrangement has primary and secondary contact elements 12, 14. The second (lower) connector contact also has primary and secondary contact elements. For charging the battery or any other suitable energy storage 36 of the electric vehicle, the energy storage 36 is electrically connected to the inlet contacts 24. Further, the power supply 34 is electrically connected to the primary contact elements of the first and second connector contact. In order to measure the contact impedance of the electrical contact between the connector contacts to the respective inlet contacts, the secondary contact element 14 of the first connector contact and the secondary contact element of the second connector contact are electrically connected to the voltage measurement device 19. By measuring the voltage with the voltage measurement device 19 at a given current provided by the power supply 34, the impedance can be determined.

### Further aspects:

Next, some further optional general aspects are described. Reference signs are provided for illustration only, but do not imply and limitation to any particular Figure shown herein. Each of these aspects can be combined with any other aspect or embodiment described herein, unless inconsistent with each other.

As already indicated above, also in the following the charging coupler is an EVSE connector and the counter coupler is an EV inlet, but this identification is intended to be without loss of generality. Hence, the disclosure is more generally applicable to any case in which the described EVSE connector is any charging couple, and the EV inlet is any counter coupler.

First, aspects relating to the connector and/or inlet are described. According to an aspect, the primary contact element 12 has a radially inward facing contact surface, and may be a tubular (e.g., tulip-type) contact. According to an aspect, the secondary contact element 14 has a radially outward facing contact surface, and may be a pin or a feeder contact. Likewise, a blade type contact is possible, for example with the counter-coupler contact element being a blade sandwiched by the primary and secondary contact elements.

According to a further aspect, the primary and secondary contact elements 12, 14 are arranged coaxially with respect to each other, the secondary contact element 14 being preferably arranged coaxially within the primary contact element 12. According to an aspect, the primary and secondary contact elements 12, 14 have surface portions facing each other and being arranged for receiving a portion of the inlet contact element 24 therebetween.

According to an aspect, the inlet contact element 24 is tubular having an inner and outer surface, and the primary contact element 12 and a secondary contact element 14 are adapted for contacting, respectively, the outer and inner surfaces of the inlet contact element 24.

According to an aspect, the primary and secondary contact elements 12, 14 belong to a first connector contact of the charging connector 10 (e.g., having a first polarity; in particular belonging to a first connector contact having a first polarity), and the inlet contact element 24 is a first inlet contact (having the first polarity). The charging connector 10 further comprises a second connector contact and the EV inlet 11 comprises a second inlet contact, the second connector contact and the second inlet contact having a second polarity being opposite to the first polarity. The second connector contact may have an analogous structure as the first connector contact, and in particular comprise elements analogous to those of the first connector contact, for example a primary contact element 12 and a secondary contact element 14 of the second connector contact for electrical connection to (different surface portions of) the second inlet contact (inlet contact element) 24 of the EV inlet 11 when the charging connector 10 and the EV inlet 11 are connected to each other. An insulating element 16 of the second connector contact may electrically separate the primary and secondary contact elements 12, 14 of the second connector contact from each other.

According to an aspect, the inlet contact element 24 is conductive. The inlet contact element 24 may be a single contact element and/or a single conductive structure, e.g., a single metal piece.

According to an aspect, the primary contact element 12 and the secondary contact element 14 are arranged to directly contact different surface portions of the inlet contact element 24 when the charging connector 10 and the electric vehicle inlet contact (inlet contact element 24) are connected to each other. According to an aspect, the secondary contact element 14 is arranged, preferably coaxially, within the primary contact element 12.

According to an aspect, insulating element 16 creates an insulating barrier along a surface portion of the charging connector 10 between the primary and secondary contact elements 12, 14.

According to an aspect, the charging connector 10 comprises at least one contact cavity housing the primary and secondary contact elements 12, 14.

According to an aspect, the primary contact element 12 and the secondary contact element 14 may be arranged to electrically contact the single inlet contact element 24 when the charging connector 10 and the electric vehicle inlet are connected to each other.

According to an aspect, the secondary contact element 14 may be disposed, preferably coaxially, within the primary contact element 12.

According to an aspect, the connector contact(s) is/are at least one electrical contact of the following list: a negative direct current contact, a positive direct current contact, a control contact and a protective earth contact.

According to an aspect, the connector is according to a charging standard, such as IEC 63379 of SAE J3271. According to an aspect, the connector is an MCS connector.

Next, aspects relating to the measurement of the electrical parameter and/or of the charging are described.

According to an aspect, the electrical parameter is indicative of an impedance, in particular of an impedance of the electrical path, and in particular is indicative of an electrical contact resistance between the primary contact element 12 and the inlet contact element 24 and/or between the secondary contact element 14 and the inlet contact element 24.

According to an aspect, the measurement circuit 18 comprises is connected to the primary contact element 12 by a primary contact element terminal and is connected to the secondary contact element 14 by a secondary contact element terminal.

According to an aspect, the measurement circuit 18 is adapted for measuring a voltage drop over at least one of a) the interface between the primary contact element 12 and the inlet contact element 24, or b) the interface between the secondary contact element 14 and the inlet contact element 24, or c) both in series.

According to an aspect, the measurement circuit 18 is configured for applying a switched or pulsed current during measuring the electrical parameter.

According to an aspect, the measurement circuit 18 comprises a measurement device 19, e.g., a voltmeter, ohmmeter, or multimeter. According to an aspect, the electrical parameter is indicative of, or correlated with, an electrical path resistance along the electrical path 20, in particular with an electrical contact resistance between the primary contact element 12 and the inlet contact element 24 and/or between the secondary contact element 14 and the inlet contact element 24, the electrical parameter in particular comprising at least one of: an electrical resistance or conductivity, a current, a voltage, a frequency characteristic.

According to an aspect, the primary contact element is connected to an electrical power supply for providing charging current to via the inlet contact element 24 to the EV. According to an aspect, the connector is adapted for applying a current of at least 10 A during measuring the electric impedance.

According to an aspect, the EVSE is configured for DC charging, and/or its connector is a DC connector for DC charging.

Next, aspects relating to control of the EVSE are described.

According to an aspect, the EVSE comprises an electric power source configured for charging the EV via the connector 10 and in particular via at least the primary contact element. The power source may be a DC power source, i.e., delivering electrical DC power to the connector. The power source may be configured for applying a switched or pulsed current during measuring the electrical parameter.

According to an aspect, the EVSE may further comprise a controller adapted to monitor the electrical parameter. The controller may be configured for at least one of the following:
- identifying an anomaly in the electrical parameter, in particular by comparing the electrical parameter to a predetermined threshold; and preferably for outputting a warning message upon detection of an anomaly based on the electrical parameter;
- adapting a charging operation of the EV by the EVSE upon detection of an anomaly based on the electrical parameter;
- implementing a feedback mechanism adapted to trigger an action when the electrical parameter is determined to be outside of a specified operating range,
- controlling a charging power as a function of the electrical parameter.

Thereby, the controller may in particular be configured to implement a feedback mechanism adapted to trigger an action when the electrical parameter is determined to be outside of a specified operating range, and/or to control a charging power as a function of the electrical parameter.

According to an aspect, the controller may be adapted for identifying an anomaly in the electrical parameter(s), e.g., by detecting whether a resistance determined from the measured electrical parameter exceeds a predetermined threshold. Such an anomaly may indicate a problem such as a poor connection or a fault in the charging system. The controller may be adapted for outputting a warning message upon detection of an anomaly. The warning message may be sent to a central control or management system, e.g., over a network. The warning message may be outputted to an operator. The controller may be adapted for adapting a charging process upon detection of an anomaly, e.g., by limiting a charging current / charging power, or by interrupting or aborting the charging process. Thus, the controller may be adapted for performing diagnostic functions, including notification of system warnings or service requirements.

According to an aspect, the controller may be adapted for adaptively controlling operating conditions related to the different states and parameters under which the charging connector 10 operates, such as at least one of: operating mode; power output level; charging rate; alarm transmission, in response to measured values such as at least one of: fluctuations in the electrical parameters of the electrical path 20 and/or power supply voltages and/or current demand during charging and/or environmental conditions such as temperature/humidity; and variations in the state of the electric vehicle battery 36.

Also provided is a method of charging an electric vehicle using the charging connector 10 and/or the EVSE as described herein. The method comprises connecting the charging connector 10 and the EV inlet 11 to each other, thereby electrically connecting the primary contact element 12 and the secondary contact element 14 to the inlet contact element 24 of the EV inlet 11; and measuring, by the measurement circuit 18, an electrical parameter of an electrical path 20 formed by the primary contact element 12, the inlet contact element 24 and the secondary contact element 14. The method may further comprise adaptively controlling an operating condition of the EVSE based on the measured electrical parameter.

According to an aspect, the charging connector 10 may comprise a controller adapted to monitor and control the voltage level in the charging connector 10 and/or the charging path 20, thereby enabling control of the charging process to ensure safe and efficient charging of the electric vehicle.

According to an aspect, the controller may be adapted to implement a feedback mechanism adapted to trigger alarms or actions when unsafe electrical parameters such as voltage levels and/or electrical current/resistance values are detected. That is, the charging connector 10 can be adapted to continuously evaluate the electrical parameters along the charging path 20, such as voltage, current and resistance. If these parameters deviate beyond pre-defined safe limits, the controller feedback mechanism is activated. This activation can result in a variety of responses, ranging from triggering alarms to initiating corrective actions. This functionality allows potential hazards associated with electrical malfunctions to be avoided, thereby ensuring the safety and reliability of the operation of the system.

According to an aspect, the controller can be adapted to control a charging current as a function of the electrical parameter of the charging path 20 and/or the temperature, preferably enabling adaptive control of the charging process based on real-time temperature data. That is, the controller can be configured to dynamically adjust the charging current based on two key factors: the electrical characteristics of the electrical path 20 and the ambient temperature. By integrating real-time temperature data, the controller can adaptively modulate the charging process. This approach ensures that the charging current is optimised for both efficiency and safety, taking into account variations in environmental conditions and electrical path characteristics. This enables a more responsive and intelligent charging system that can adapt to different scenarios, improving the effectiveness and reliability of the charging process.

According to an aspect, the EVSE comprises a measurement circuit 18 configured to measure the electrical path parameters, thereby enabling the quality and integrity of the electrical connection to be monitored and assessed. By measuring parameters along the electrical path 20, problems such as poor contact or potential faults in the charging process can be detected, thereby increasing the safety and efficiency of EV charging.

According to an aspect, the method may comprise detecting anomalies or fluctuations in the electrical path parameters which may indicate a problem such as a poor connection or a fault in the charging system. Prompt detection and warning of such anomalies allows early intervention to prevent further complications or damage to the charging system. This proactive approach ensures a more stable and safe charging process, protecting both the equipment and the vehicle being charged.

According to an aspect, the method may include performing diagnostic functions, including notification of system warnings or service requirements. Providing timely alerts and service reminders may allow for the preemptive resolution of potential problems, reducing downtime and extending the life of the system, thereby ensuring continued and efficient operation and/or improving system maintenance and reliability.

According to an aspect, the method may comprise adaptively controlling operating conditions related to the different states and parameters under which the charger operates, such as at least one of: operating mode; power output level; charging rate; alarm transmission, in response to measured values such as at least one of: fluctuations in electrical parameters of the electrical charging path 20 and/or power supply voltages and/or current demand during charging and/or environmental conditions such as temperature/humidity; variations in the state of the electric vehicle battery 36.

Preferably, such adaptive control may allow adjustments based on real-time data from various sources, such as electrical path fluctuations, power supply conditions, etc. thereby automatically modifying operating parameters to suit the current needs of the system and the electric vehicle, beneficially improving the charging process in real time, in response to changing conditions and requirements and/or enhancing overall performance and reliability.

According to the embodiments described herein, the electrical path parameters may include at least one of: an electrical impedance (e.g., resistance or conductivity), a current, a voltage, an impulse response, a transfer function, a frequency characteristic.

According to an aspect, a controller for the charging connector / the EVSE may further comprise a network interface for connecting the controller to a data network, in particular a global data network such as the Internet. The controller is operatively connected to the network interface for carrying out commands received from the data network. The commands may include a control command for controlling the EVSE charging operation. The controller is then adapted for operating the EVSE according to the received control command. The commands may include a status request. In response to the status request, or without prior status request, the controller may be adapted for sending a status information to the network interface, and the network interface is then adapted for sending the status information over the network. The status information may in particular include the measured electrical parameter (e.g., a quantity derived from the electrical parameter).

(...) The data network may be an Ethernet network using TCP/IP such as LAN, WAN or Internet. The data network may comprise distributed storage units such as Cloud. Depending on the application, the Cloud can be in form of public, private, hybrid or community Cloud. This written description uses examples to disclose the disclosure, including the best mode, and also to enable any person skilled in the art to practice the described subject-matter, including making and using any apparatus or system. Embodiments described herein provide a charging connector for an electric vehicle supply equipment, a method of verifying a contact between a charging connector and a single inlet contact of an electric vehicle inlet, the present concept in particular enabling safe and efficient charging of the electric vehicle. While various specific embodiments have been disclosed in the foregoing, mutually non-exclusive features of the embodiments described above may be combined with each other. The patentable scope is defined by the claims, and other examples are intended to be within the scope of the claims if they have structural elements that do not differ from the literal language of the claims, or if they include equivalent structural elements with insubstantial differences from the literal language of the claims.

### REFERENCE SIGNS

- 10: charging coupler (EVSE connector)
- 11: counter-coupler (EV inlet)
- 12: primary contact element
- 14: secondary contact element
- 16: insulating element
- 18: measurement circuit
- 19: measurement device
- 20: electrical path
- 24: counter-coupler contact element (inlet contact)
- 30: mounting base of connector contact
- 32: mounting base of inlet contact
- 34: electrical power supply
- 36: vehicle battery

## Claims

1. A charging coupler for coupling an electric vehicle, EV, to an electric vehicle supply equipment, EVSE, by connecting the charging coupler (10) to a counter coupler (11), the charging coupler (10) comprising:
- a primary contact element (12) and a secondary contact element (14) for electrical connection to a counter-coupler contact element (24) of the counter-coupler (11) when the charging coupler (10) and the counter-coupler (11) are connected to each other;
- an insulating element (16) electrically separating the primary and secondary contact elements (12, 14) from each other; and
- a measurement circuit (18) configured to measure an electrical parameter of an electrical path (20) formed by the primary contact element (12), the counter-coupler contact element (24) and the secondary contact element (14) when the charging coupler (10) and the counter-coupler (11) are connected to each other.

2. The charging coupler (10) according to claim 1, wherein
- the charging coupler (10) is an EVSE connector and the counter coupler (11) is an EV inlet, or
- the charging coupler is an EV inlet and the counter coupler is an EVSE connector.

3. The charging coupler (10) according to any preceding claim, wherein at least one of the following (a) to (c):
(a) the primary contact element (12) has a radially inward facing contact surface, and/or the secondary contact element (14) has a radially outward facing contact surface;
(b) the primary and secondary contact elements (12, 14) are arranged coaxially with respect to each other, the secondary contact element (14) being preferably arranged coaxially within the primary contact element (12);
(c) the primary and secondary contact elements (12, 14) have surface portions facing each other and being arranged for receiving a portion of the counter-coupler contact element (24) therebetween.

4. The charging coupler (10) according to any preceding claim, wherein
counter-coupler contact element (24) being tubular having an inner and outer surface, and wherein
the primary contact element (12) and a secondary contact element (14) are adapted for contacting, respectively, the outer and inner surfaces of the counter-coupler contact element (24).

5. The charging coupler (10) according to any preceding claim, wherein
the primary and secondary contact elements (12, 14) belong to a first charging coupler contact of the charging coupler (10), and wherein the counter-coupler contact element (24) is a first counter-coupler contact element, and wherein the charging coupler (10) further comprises a second charging coupler contact and the counter-coupler (11) comprises a second counter-coupler contact element,
the second charging coupler contact preferably comprising
- a primary contact element (12) and a secondary contact element (14) of the second charging coupler contact for electrical connection to the second counter-coupler contact element (24) of the counter-coupler (11) when the charging coupler (10) and the counter-coupler (11) are connected to each other; and
- an insulating element (16) of the second charging coupler contact electrically separating the primary and secondary contact elements (12, 14) of the second charging coupler contact from each other.

6. The charging coupler (10) according to any preceding claim, wherein
the electrical parameter is indicative of an impedance, in particular of an impedance of the electrical path, and in particular is indicative of an electrical contact resistance between the primary contact element (12) and the counter-coupler contact element (24) and/or between the secondary contact element (14) and the counter-coupler contact element (24).

7. The charging coupler (10) according to any preceding claim, wherein the measurement circuit (18) is connected to the primary contact element (12) by a primary contact element terminal and is connected to the secondary contact element (14) by a secondary contact element terminal.

8. The charging coupler (10) according to any preceding claim, wherein the measurement circuit (18) is configured for applying a switched or pulsed current during measuring the electrical parameter.

9. An electric vehicle supply equipment, EVSE, comprising the charging coupler (10) according to any preceding claim, the charging coupler being an EVSE connector of the EVSE and being adapted for coupling the EVSE to the EV by connecting the charging coupler (10) to the counter coupler (11) being an EV inlet of the EV.

10. The electric vehicle supply equipment according to claim 9, further comprising at least one of:
(a) an electric power source configured for charging the EV via the connector (10) and in particular via at least the primary contact element, the power source being preferably configured for applying a switched or pulsed current during measuring the electrical parameter;
(b) a controller adapted to monitor the electrical parameter, wherein the controller is preferably configured for at least one of the following:
- identifying an anomaly in the electrical parameter, in particular by comparing the electrical parameter to a predetermined threshold; and preferably for outputting a warning message upon detection of an anomaly based on the electrical parameter;
- adapting a charging operation of the EV by the EVSE upon detection of an anomaly based on the electrical parameter;
- implementing a feedback mechanism adapted to trigger an action when the electrical parameter is determined to be outside of a specified operating range,
- controlling a charging power as a function of the electrical parameter.

11. An electric vehicle, EV, comprising the charging coupler (10) according to any one of claims 1 to 8, the charging coupler being an EV inlet of the EV and being adapted for coupling the EV to the EVSE by connecting the charging coupler (10) to the counter coupler (11) being an EVSE connector of the EVSE.

12. A method (100) of charging an electric vehicle using the charging coupler (10), EVSE or EV according to any preceding claim, the method comprising:
- connecting the charging coupler (10) and the counter-coupler (11) to each other, thereby electrically connecting the primary contact element (12) and the secondary contact element (14) to the counter-coupler contact element (24); and
- measuring, by the measurement circuit (18), an electrical parameter of an electrical path (20) formed by the primary contact element (12), the counter-coupler contact element (24) and the secondary contact element (14).

13. The method (100) according to claim 12, further comprising:
- adaptively controlling an operating condition of the EVSE based on the measured electrical parameter.

14. The method (100) according to claim 12 or 13, wherein
the counter-coupler contact element (24) is tubular having an inner and outer surface, and is inserted inbetween the primary and secondary contact elements (12, 14) in such a manner that the primary contact element (12) contacts the outer surface of the counter-coupler contact element (24) and that the secondary contact element (14) contacts the inner surface of the counter-coupler contact element (24).
